# EUROPEAN PATENT APPLICATION

(11) **EP 1 396 690 A1**
(43) Date of publication of application: **10.03.2004**
(21) Application number: 01273788.8
(22) Date of filing: 22.11.2001
(51) Int. Cl.: F25B 9/04

(54) **METHOD FOR TRANSFORMING ENERGY AND VORTEX TUBE FOR CARRYING OUT SAID METHOD**

(30) Priority: 21.02.2001 RU 2001105128
(71) Applicant: Sintos Systems OU, Harjumaa, 74001 (EE)
(72) Inventor: GRITSKEVICH, Oleg Vyacheslavovich, Vladivostok, 690002 (RU); GRITSKEVICH, Boris Olegovich, Vladivostok, 690002 (RU); ILYIN, Viktor Vasilievich, Vladivostok, 690014 (RU); LISNYAK, Stanislav Afanasievich, Vladivostok, 690069 (RU)
(74) Representative: Urgas, Enn
(86) International application number: PCT/RU2001/000503
(87) International publication number: WO 2002/066909

(57) **Abstract**

The invention relates to the electric-power industry and can be used for producing both thermal and electric energy and for measuring the liquid or gas flow temperature. The aim of the invention is to increase the performance of the vortex tube based on Ranke's effect and to extend the functional capabilities thereof for producing electric energy. The inventive methods for transforming energy of a running liquid or gas flow inside the vortex tube using Ranke's effect are carried out by an additional heating of liquid or gas in the hot part of the vortex tube and/or additional production of electric energy taken from windings (10) mounted on the vortex tube-case (1), the said case being made of a dielectric material. The inventive vortex tube for carrying out the said method comprises a tube-case (1) provided with a cyclone (3) at the end side thereof. Though, the said case is not grounded and is made of an electrically non-conductive material with electro-static properties.

## Description

### Technical field

This invention relates to the electric-power industry and can be used for the production of both thermal and electric energy as well as for the alterations of temperature inside the liquid or gas flows.

### Background Art

A French engineer J.Ranke's usage of a vortex tube for the transformation and extraction of energy is widely known. First, the vortex tube was used to divide a gas flow into the hot and the cold streams. A classic Ranke's vortex tube [1; 2, page 108] contains a cylindrical tube with on one end a cyclone, which is connected to one of the edge sides of the case, having a diaphragm on the other edge side (cold part), and a breaking device, which is a regulating cone inside the cone at the end, opposite to the cyclone (hot part). Compressed gas is fed tangently through the cyclone to the tube where it is divided inside the vortex flow into the cold (central) and the hot (peripheral) components. A cold gas flow leaves the tube through the diaphragm, and a hot part of the flow gets out through a ring-gap between the inner surface of the tube and a regulating cone.

Later on, the works on increasing the Ranke's vortex tube effectiveness were aimed at the optimization of the constructive elements parameters; for example, through the use of a coned case [3], through optimization of dimensions correlations [4], through bringing into the flow part the elements, which organize and preserve the laminar and turbulent flow mode [5], through the correlation between the elements - for instance by connecting the hot flow to the cold outflow [6].

The usage of the Ranke's gas vortex tubes known constructions is not effective enough, particularly because the movement energy of the loaded particles, which occur during the vortex flow movement process, and peculiarities of the correlations between the thermo-dynamic parameters of different flow cuts are not used.

Much later a liquid splitting was carried out into Ranke's vortex tube (water in particular), yet it has been divided not into the cold and the hot streams, but into the cold and the warm flows [2, page 171]. The simplest vortex tube used for such a splitting in order to heat the water, contains a tube-case with a cyclone on one end connected to the case on the edge side [7].

The effectiveness of water heating in such a tube - when calculated on the base of the classic thermo-dynamic laws - exceeded 100%. The placement of a straightening break inside the tube - particularly the radial ribs - resulted in the effectiveness increase of 150-200%. Besides, the occurrence of additional energy (which was proved in practice) was explained by the cold nuclear synthesis reaction (occurring,'for instance, as a result of cavitations), by the vortex movement radiation, in other words by the transformation of the waters inner energy (intermolecular correlative energy as well as the energy of the inter-, inner and external-nuclear correlations) into the heating [2, page 193]. Yet the movement energy of the loaded particles, which occurs as a result of the abovementioned reactions, was not used in the applications of the known Ranke's vortex tube. Besides, the particularities of the thermo-dynamic parameters correlation in different flow-sections were not used sufficiently though the effectiveness increase of the vortex tube function by the increase of the outflow waters temperature up to more than 60°C [2, page 166] (external heating) has been notified.

### Disclosure of the Invention

The disclosed technical task is to increase the effectiveness of the vortex tube operation using the Ranke's effect as well as to enlarge its functional possibilities - to produce the electric energy with it.

The first method of transforming energy from the running liquid or gas flow inside the vortex tube based on Ranke's effect is achieved through the additional heating of liquid or gas in the hot part of the vortex tube; thereby the effect of such a heating is somewhat higher than the heating of the initial liquid or gas.
It is recommendable to conduct some additional heating by means of electrical ignition impulses-discharges, for example inside the gap between the breaking device and the inner surface of the vortex tubes hot part, thus inside the hot flow. Heating the breaking device itself is also possible.
The second method allows some additional electric energy taking, which is obtained from the electro-magnetic windings mounted on the vortex tube-case made of dielectric material. It is recommendable to isolate the vortex tube-case from the ground.
The laser - preferably the UV-diapason one - might irradiate the liquid or gas flows. It is recommendable to send the laser beam along the vortex tube axis from the cold part to the hot one.

The best result is achieved by mixing both methods: additional heating is done by means of electric power generated by the case windings.

Vortex tube used for this method contains a tube-case with a cyclone on the end connected to the case with one edge side; hereby the case is not grounded and is made from electrically non-conductive material with electro-static features.
A tube-case can be made as a rotational paraboloid with its cross-section, which becomes bigger away from the cyclone connection side.
It is recommendable to position the tube-case vertically while the cyclone connection side is mounted downwards. It is recommendable to use the tube-case material which has a bigger co-efficient of dielectric penetration than a liquid or a gas the vortex tube is used for.
Another cyclones edge side might have a diaphragm with its axis direction coinciding the tube-case and its diameters opening smaller than the inner diameter of the tube-case. Optical quantum generator might be additionally mounted on the cyclone side of the tube-case external edge; the axis of its beam spreading coinciding the tube-case axis. It is recommendable to use a UV-diapason optical quantum generator. It is recommendable to use a material, which possesses the ability to reflect the beams generated by the optical quantum generator at least for the tube-cases inner surface or a part of it.
The inner surface of the tube-case or a part of it might have a coating which has a bigger dielectric penetration co-efficient than a running liquid or gas which the vortex tube is used for; hereby it is recommendable to use a coating made of segneto-electric material.
At least one inner tube with the open edges made of dielectric material with a dielectric penetration co-efficient bigger than this of liquid or gas the vortex tube is used for, can be placed with a gap coaxially free inside the tube-case; hereby the inner tube length should be less than the tube-case length.
The inner tube can be made of dielectric material with magnetic features, yet hereby the magnetic power direction coincides the tube axis itself.
Breaking device can be mounted inside the tube-case on the end opposite to the cyclone; it can be, for example, a gap-mounted regulating cone, particularly hole and/or with a concaved surface, with an axis correlating with the case and its peak towards the cyclone.
It is recommendable to have the electro-magnetic winding mounted on the case.
Breaking device can be provided with a heater, preferable an electric one.
Besides, it is recommendable to construct a heater, which consists of at least one pair of electrodes, one of which is mounted on the breaking device, and another - oppositely on the tube-case. It is possible to place several pairs of electrodes with their working parts placed inside the gap between the breaking device (regulating cone) and the tube-case inner surface. It is recommendable to have the electric heater electrically connected to the electro-magnetic winding.
The heater might be also non-electric, thus containing a burner for burning the liquid or gas fuel; thereby the burner's nozzle is directed inside the breaking device cone cavity.

### Brief description of the figures on the drawings

The invention is illustrated by the drawings of a thermo-electric water generator. Fig. 1 shows the general outlook of a cylindrical thermo-electric generator (water-flow direction is shown with the arrows), Fig. 2 shows the cross-section of its middle part. Fig. 3 shows the general outlook of a coned thermo-electric generator.

### The Example for Carrying out the Invention

The invention is explained on the examples of the thermo-electric water generator based on the Gritskevich's Vortex Tube.

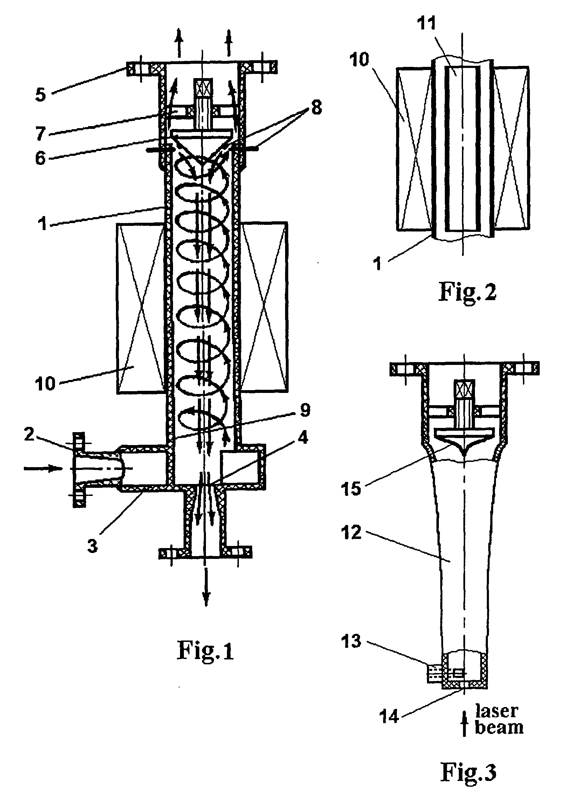

A cylindrical thermo-electric generator, which is placed vertically as it is shown on Fig. 1, contains a tube-case 1 with a cold part, which is provided with a snail-formed cyclone 2 with an injector nozzle 3 and a diaphragm with an opening 4. A hot part contains an outlet nozzle 5, a regulating cone 6 with an axis-regulating device 7 and a pair of electrodes 8, which are evenly spread along the circumference of a gap between the case 1 and the cone 6. A case 1 is coated inside with a thin layer of Titanate Barium (TiBa) and is provided outside with an electro-magnetic winding 10. Case 1, snail 2, cone 6 and nozzles 3 and 5 are made of plastic and isolated from the ground.

A cold-water flow entering the cold part through the nozzle 3 is divided into the warm (central) and the hot (peripheral) parts inside the vortex movement generated by the snail 2 in the case 1. While rotating, the hot part of the flow adjusting the inner layer 9 moves to the case 1 hot part and flows out from it through the ring-gap between the case edge 1 and a cone 6. While rotating, the warm part of the flow reflected from the cone 6 moves towards the opening 4 and flows out through it. Being partly ionized (through its friction against the layer 9 and through cavitations processes of cold nuclear synthesis), the water gets additional ionization through the electrodes 8 high-voltage discharges; the additional water heating is done also by means of those discharges.
The electric movement power occurs through electro-magnetic induction in the winding 10. A part of the windings 10 electric energy is used for the creation of discharges between the electrodes 8. To improve the water flow splitting into the warm and the hot parts as well as to increase the water ionization ratio, a plastic inner tube 11 can be placed inside the case 1 as it is shown on Fig. 2. Plastic has to have magnetic features; magnetic power direction of the tube 11 has to be directed along its axis, which allows the exact centering of the tube 11 during the thermo-electric generator operation.

Fig. 3 shows an example of a coned thermo-electric generator set (electro-magnetic winding is not shown); its construction and details are similar to the abovementioned construction of a cylindrical thermo-electric generator.
A thermo-electric generator is mounted also vertically and contains a coned tube-case 12 with a cold part, which switches on the cyclone constructed as a tangent-feeding nozzle 13, a diaphragm with an opening 14 and a UV-diapason optical quantum generator (not shown). The hot part contains a regulating cone 15. Parabolas form the case 12 inner and the cone 15 external coned surfaces. Coned thermo-electric generator works similarly to the abovementioned cylindrical thermo-electric generator with one exception that there is no additional water heating in the hot part, while a UV-diapason laser beam passing through the opening 14 provides additional water ionization.

### Information sources:

1. Patent US 1,952,281, 1934.
2. Ju.S.Potapov, L.P.Fomiskiy, "Vortex power engineering and cold nuclear synthesis from the position of the movement theory". - Kishinew-Cherkassy: "OKO-Plus", 2000.
3. Certificate SU 1304526, 1976.
4. Patent US 5,327,728, 1994.
5. Patent application RU 5067921, publications date: 09.01.1995.
6. Patent application RU 95110338, publications date: 20.06.1997.
7. Patent RU 2045715, 1995 (the prototype)

## Claims

1. A method for transforming energy from the running liquid or gas flow inside the vortex tube based on Ranke's effect, **characterized in that** an additional heating of liquid or gas in a hot part of the vortex tube is used.

2. The method of claim 1, wherein the additional heating of breaking device is used.

3. The method of claim 1, wherein the additional heating is done by means of the electrical ignition impulses-discharges.

4. The method of claim 3, wherein the electrical ignition impulses-discharges are produced inside the gap between the breaking device and the inner surface of the hot part of the vortex tube.

5. A method for transforming energy from the running liquid or gas flow inside the vortex tube based on Ranke's effect, **characterized in that** additional electric energy is extracted from the electro-magnetic windings mounted on the vortex tubes case made of dielectric material.

6. The method of claim 5, wherein the tube-case is isolated from the ground.

7. The method of claim 5, wherein the liquid or gas flow is irradiated by the laser.

8. The method of claim 5, wherein the liquid flow is irradiated by the beams of a UV-diapason laser.

9. The method of claim 8, wherein the laser beam is directed along the vortex tube axis.

10. The method of claim 9, wherein the laser beam is directed from the vortex tubes cold part towards its hot part.

11. The method of the claims I and 5, wherein the additional heating is done by electric power obtained from the case electro-magnetic windings.

12. A vortex tube containing a tube-case with a cyclone on one end, connected to the case with one edge side, **characterized in that** the tube-case is not grounded and is made of electrically non-conductive material which has electro-static features.

13. The vortex tube of claim 12, wherein the tube-case is made as a rotational paraboloid with a cross-section which becomes bigger away from the side of the cyclone connection.

14. The vortex tube of claim 12, wherein the tube-case is positioned vertically while the cyclone connection side is mounted downwards.

15. The vortex tube of claim 12, wherein the tube-case material has a bigger co-efficient of dielectric penetration than a liquid or a gas the vortex tube is used for.

16. The vortex tube of claim 12, wherein the opposite side of the cyclone contains a diaphragm with its axis direction coinciding the tube-case and its diameters opening smaller than the inner diameter of the tube-case.

17. The vortex tube of claim 12, wherein the inner surface of the tube-case or a part of it has a coating, which has a bigger dielectric penetration co-efficient than a running liquid or gas which the vortex tube is used for.

18. The vortex tube of claim 12, wherein at least one open-edged inner tube made of dielectric material with a dielectric penetration co-efficient bigger than this of liquid or gas the vortex tube is used for, is placed with a gap coaxially free inside the tube-case; hereby the inner tube length should be less than the tube-case length.

19. The vortex tube of claim 12, wherein the breaking device is mounted inside the tube-case on the end opposite to the cyclone.

20. The vortex tube of claim 12, wherein the electro-magnetic winding is mounted on the tube-case.

21. The vortex tube of claim 16, wherein the said vortex tube additionally contains an optical quantum generator on the cyclone side of the tube-case external edge; the axis of its beam spreading coinciding the tube-case axis.

22. The vortex tube of claim 17, wherein segneto-electric material is used as a coating.

23. The vortex tube of claim 18, wherein the inner tube is made of dielectric material with magnetic features; hereby the magnetic power direction coincides the tube axis itself.

24. The vortex tube of claim 19, wherein the breaking device is made as a gap-mounted regulating cone, with its axis correlating with the tube-case and its peak towards the cyclone.

25. The vortex tube of claim 19, wherein the breaking device is equipped with a heater.

26. The vortex tube of claim 21, wherein a UV-diapason optical quantum generator is used.

27. The vortex tube of claim 21, wherein the material of at least the tube-cases inner surface or its part has the ability to reflect the beams generated by the optical quantum generator.

28. The vortex tube of claim 24, wherein the regulating cone is made hole.

29. The vortex tube of claim 24, wherein the regulating cone surface is concaved.

30. The vortex tube of claim 25, wherein the breaking device is equipped with an electric heater.

31. The vortex tube of claim 30, wherein the heater is made of at least one pair of electrodes, one of which is mounted on the breaking device, and another - oppositely on the tube-case.

32. The vortex tube of the claims 20 and 30, wherein the heater is connected to the electro-magnetic winding electrically.

33. The vortex tube of the claims 25 and 28, wherein the heater contains a burner for burning the liquid or gas fuel; thereby the burner's nozzle is directed inside the cone cavity.

34. The vortex tube of the claims 24 and 31, wherein the said vortex tube contains several pairs of electrodes with their working parts placed inside the gap between the regulating cone and the tube-case inner surface.
